# EUROPÄISCHE PATENTSCHRIFT

(11) **EP 1 068 249 B1**
(45) Veröffentlichungstag und Bekanntmachung des Hinweises auf die Patenterteilung: **06.05.2004**
(21) Anmeldenummer: 99907558.3
(22) Anmeldetag: 20.02.1999
(51) Int. Cl.: C08F 291/02, C08F 265/06, C08F 285/00

(54) **GIESSMASSE FÜR DIE HERSTELLUNG VON SANITÄRFORMTEILEN**
CASTING MATERIALS FOR PRODUCING SHAPED PARTS FOR SANITARY APPLIANCES
MATIERE A COULER POUR LA PRODUCTION DE PIECES MOULEES SANITAIRES

(30) Priorität: 19.03.1998 DE 19812122
(43) Veröffentlichungstag der Anmeldung: 17.01.2001
(73) Patentinhaber: BLANCO GmbH + Co KG, 75038 Oberderdingen (DE)
(72) Erfinder: HAJEK, Andreas, D-74336 Brackenheim (DE); HECK, Thomas, D-74858 Aglasterhausen (DE); HARKE, Stefan, D-74889 Sinsheim-Rohrbach (DE); WILHELM, Thomas, D-75056 Sulzfeld (DE)
(74) Vertreter: Hoeger, Stellrecht & Partner
(86) Internationale Anmeldenummer: PCT/EP1999/001121
(87) Internationale Veröffentlichungsnummer: WO 1999/047576

(56) Entgegenhaltungen:
- EP-A- 0 297 706
- EP-A- 0 639 539

## Beschreibung

Die Erfindung betrifft eine Gießmasse für die Herstellung von Sanitärformteilen, welche einen auf Methylmethacrylat basierenden Sirup sowie 50 bis 85 Gew.% eines anorganischen Füllstoffes, bezogen auf die Gießmasse umfaßt. Die Erfindung umfaßt ferner Sanitärformteile, hergestellt aus solchen Gießmassen, wobei der Begriff Sanitärformteile weit auszulegen ist und neben Waschbecken, Duschtassen, Badewannen auch Küchenspülen, Arbeitsplatten und dergleichen abdeckt.

Gießmassen der eingangs beschriebenen Art sind vielfältig aus der Literatur bekannt, beispielsweise aus dem deutschen Patent DE 2449656 sowie der europäischen Patentanmeldung EP 0361101 oder der WO 95/23825.

Aufgrund der nicht allzu großen Schlagzähigkeit der ausgehärteten Gießmassenmaterialien sind die Formteile mit einer relativ hohen Wandstärke auszuführen (teilweise mit mehr als 10 mm). Wandstärken dieser Größenordnung führen insbesondere bei Rezepturen, bei denen ein gewolltes Absinken von groben Füllstoffpartikeln zur Sichtseite hin stattfindet, zu sehr unebenen Rückseiten und im Fall von Küchenspülen weisen die Ausgußlöcher häufig hohe Rauhigkeiten bzw. sogar Blasen auf. Dies führt zu Problemen in der Weiterverarbeitung. Insbesondere bei den Küchenspülen kann dies zu Undichtigkeiten bei der Ablaufgarnitur führen, vor allem wenn ein Gießmassenüberstand abzufräsen ist.

Bei Gießmassen, die unter Verwendung von Cristobalitmehlen, d.h. einem sehr feinkörnigen Material, als Füllstoff hergestellt sind, findet man eine relativ schlechte Kratzfestigkeit und Abriebbeständigkeit während die zuvor schon besprochenen Gießmassen mit relativ groben, absinkenden Füllstoffen eine relativ hohe Oberflächenrauhheit aufweisen.

Die Sirupherstellung verlangt in der Regel zwingend den Zusatz von präpolymerem Methacrylat, im folgenden kurz PMMA genannt, was längere Lösungszeiten des PMMA in dem Methylmethacrylatmonomeren verlangt. Dies erhöht die Herstellungszeiten und damit auch die Herstellungskosten.

Die letztendlich erhaltenen Gießmassen mit den notwendigen Viskositäten bedingen relativ lange Befüllzeiten für die Formen, die teilweise mehr als eine Minute betragen bei Formen, die für die Herstellung von Küchenspülen verwendet werden, selbst wenn man Befülldrucke von 5 bar verwendet.

Aufgabe der vorliegenden Erfindung ist es, eine Gießmasse zur Verfügung zu stellen, welche insbesondere bei der Verwendung von Cristobalitmehlen als Füllstoff eine verbesserte Kratzfestigkeit und Abriebbeständigkeit bei den daraus gewonnenen Formteilen liefert.

Diese Aufgabe wird erfindungsgemäß dadurch gelöst, daß die Gießmasse zusätzlich Elastomerpartikel oder -partikelagglomerate mit einer Teilchengröße von weniger als 100 µm in einer Menge im Bereich von 5 Gew.% bis weniger als 20 Gew.% umfaßt, bezogen auf die Masse des Sirup.

Die untere Grenze von 5 Gew.% an Zusatz von Elastomerpartikeln oder - agglomeraten ist einzuhalten um einen merklichen Effekt in der Kratzfestigkeit und Abriebbeständigkeit zu erzielen. Die Grenze von 20 Gew.% sollte unterschritten werden, da höhere Gehalte von Elastomerpartikeln keine besseren, sondern sogar schlechtere Resultate in Bezug auf Kratzfestigkeit und Abriebbeständigkeit verursachen.

Der bevorzugte Bereich in dem die Elastomerpartikel oder - partikelagglomerate in der Gießmasse verwendet werden liegt in Bereich von 10 bis 18 Gew.%, bezogen auf die Masse des Sirups.

Unter Teilchengröße wird die Größe des einzelnen Elastomerpartikels oder aber im Falle des Vorliegens von Agglomeraten die Größe der Partikelagglomerate verstanden.

Für die vorliegende Erfindung können sowohl vereinzelt vorliegende Partikel verwendet werden, als auch Partikelagglomerate, die bei der Aufnahme in den Sirup agglomeriert bleiben können. Zu große Partikelagglomerate können deglomeriert werden.

Die erfindungsgemäße Gießmasse erhöht nicht nur die Abriebbeständigkeit und Kratzfestigkeit des Formteiles, insbesondere wenn Cristobalitmehle als anorganische Füllstoffe verwendet werden, sondern verleiht dem Formteil auch noch eine verbesserte Schlagzähigkeit, die eine erhebliche Verringerung der Wandstärke, beispielsweise der Becken von Küchenspülen, zuläßt.

Ein weiterer vorteilhafter Effekt der erfindungsgemäßen Gießmassen liegt darin, daß die Rückseiten, d.h. die Schlechtseite des Formteiles relativ glatt erhalten wird. Außerdem lassen sich die erfindungsgemäßen Gießmassen aufgrund einer schnelleren Sirupherstellung insgesamt schneller fertigen.

Verwendet man relativ grobe Füllstoffe in der erfindungsgemäßen Gießmasse, dann erhält man glattere Oberflächen als nach den bisher bekannten Rezepturen.

Erstaunlicherweise lassen sich außerdem noch die Befüllzeiten für die Formenhohlkörper senken und dies sogar bei verringertem Druck des Befüllbehälters.

Als viskositätsmodifizierendes Mittel kann der Gießmasse (d.h. zunächst dem Sirup) PMMA mit einem Molekulargewicht im Bereich von 50.000 bis 250.000 (M_{W}) in einer Menge bis zu 20 Gew.%, bezogen auf die Masse des Sirups, beigegeben sein.

Das Elastomer der Partikel bzw. Agglomerate besteht vorzugsweise aus teilvernetztem Polymer.

Die Elastomerpartikel oder Partikelagglomerate weisen vorzugsweise Teilchen mit einer Kern-Hülle-Sturktur auf, wobei der Kern von einem Elastomer gebildet wird und die Hülle aus einem matrixverträglichen, im Sirup im wesentlichen unlöslichen Polymer. Durch die Kern-Hülle-Struktur ergeben sich größere Variationsmöglichkeiten bezüglich des Elastomers, da dieses unabhängig von seiner Verträglichkeit mit dem Sirup ausgewählt werden kann.

Bevorzugt wird die Hülle chemisch an das Kernelastomer gebunden.

Die Hülle kann in diesem oder auch in dem Fall, in dem keine chemische Bindung zu dem Kernelastomer besteht, ein thermoplastisches Polymer sein.

Bevorzugt ist die Hülle ein teilvernetztes Polymer, und weiter bevorzugt ist die Hülle im Sirup der Gießmasse quellbar. In diesem Fall läßt sich der Zusatz von Elastomerpartikeln bzw. - partikelagglomeraten gleichzeitig als Mittel zum Modifizieren der Viskosität der Gießmasse verwenden und spart teilweise oder ganz den Zusatz von PMMA ein. Das Kernelastomer der Partikel besteht vorzugsweise aus einem teilvernetzten Polysiloxan, welches zur Bildung der Hülle mit einem Acrylatmonomeren gepfropft ist.

Der Aufbau der Kernhüllepartikel weist bevorzugt einen Anteil des Kerns von 40 bis 60 Gew.%, bezogen auf das Partikelgewicht, auf.

Der Füllstoffgehalt an anorganischem Füllstoff in der Gießmasse beträgt bevorzugt von 60 bis 80 Gew.%, bezogen auf die Gießmasse.

Die erfindungsgemäße Gießmasse eignet sich insbesondere zur Herstellung von Sanitärformteilen, wobei unter dem Begriff Sanitärformteile nicht nur Handwaschbecken, Toilettenschüsseln, Duschtassen und Badewannen zu verstehen sind, sondern auch Waschtischplatten, Küchenspülen, Arbeitsplatten in der Küche und dergleichen.

Küchenspülen, die aus der erfindungsgemäßen Gießmasse hergestellt sind, lassen sich mit einer verringerten Bodenstärke im Becken der Küchenspüle herstellen, der insbesondere geringer ist als 7 mm.

Die Erhöhung der Schlagzähigkeit mit der erfindungsgemäßen Gießmasse läßt sich soweit steigern, daß sogar Bodenstärken im Beckenboden der Küchenspüle von ≤ 5 mm möglich werden.

Solche geringen Bodenstärken bei den Küchenspülen, die sich analog selbstverständlich auch auf andere Formteile anwenden lassen, bedeuten nicht nur eine Einsparung an Polymermaterial und damit eine kostengünstigere Herstellung, sondern bedeuten darüber hinaus auch kürzere Zykluszeiten bei der Herstellung der Formteile sowie insgesamt ein geringeres Gewicht, was in der Handhabung bei der Verarbeitung bzw. beim Einbau dieser Formteile Vorteile zur Folge hat.

Diese und weiter Vorteile der Erfindung werden im folgenden anhand der Beispiele noch näher erläutert.

Die allgemeine Herstellung der erfindungsgemäßen Gießmassen folgt im wesentlichen der aus dem Stand der Technik bekannten Vorgehensweise, wie sie insbesondere aus den bereits eingangs zitierten Druckschriften zu herkömmlichen Gießmassen zu entnehmen ist. Im folgenden sei daher nur kurz auf die Herstellung der Gießmassen eingegangen. Zunächst wird das Methylmethacrylatmonomere vorgelegt und in diesem die zu verwendenen Elastomerpartikel oder -partikelagglomerate dispergiert, wobei eine relativ zähflüssige Dispersion entsteht. Diese Dispersion beinhaltet vorzugsweise ca. 75 Gewichtsteile MMA und 25 Gewichtsteile Elastomerpartikel oder -partikelagglomerate. Die Dispersion kann dann weiterhin mit MMA oder auch mit MMA/PMMA-Sirup zu der gewünschten Elastomerkonzentration oder Viskosität des Sirups verdünnt werden. Die eingangs beschriebene notwendige Dispergierung der Elastomerpartikel oder - partikelagglomerate sollte mit einer schnell drehenden Dissolver-Scheibe durchgeführt werden, um zu große Agglomeratteilchen zu deglomerieren. Wie oben erwähnt, sollen die Agglomeratteilchen in der zu verwendenden Dispersion eine Größe von kleiner 100 µm aufweisen. Die Primärteilchengröße der Agglomerate beträgt häufig ca. 100 nm.

Bevorzugte Elastomerpartikel weisen wie oben erwähnt eine Kern-Hülle-Struktur auf, und in den folgenden Beispielen wird ein von der Fa. Wacker, Burghausen, Deutschland erhältliches Elastomerpartikelmaterial verwendet, das unter der Handelsbezeichnung VP 445006 erhältlich ist (im folgenden Wacker-Modifier genannt).

Der die Elastomerpartikel oder -partikelagglomerate beinhaltende Sirup wird in an sich bekannter Weise mit den zu verwendenden Füllstoffen in Form von Mehlen, Sanden oder Split aus einer Vielzahl an sich als anorganische Füllstoffe bekannter mineralischer Materialien versetzt. Darüber hinaus werden Vernetzer, Radikalstarter und Formtrennmittel zugegeben und die so erhaltene Gießmasse dann in die geeigneten Formenhohlkörper eingefüllt.

Die Temperaturzyklen zur Aushärtung der Gießmasse in den Formenhohlkörpern unterscheidet sich von den Temperaturzyklen die im Stand der Technik empfohlen wurden nicht. Bei den nachfolgenden Vergleichsbeispielen und Beispielen wurde folgender Temperaturzyklus verwendet:

Vor und während der Befüllung wird die Sichtseite der Form auf 60°C und deren Rückseite auf 40°C temperiert. Die Gießmasse weist beim Befüllen der Form in der Regel Raumtemperatur auf.

Bei der fertig befüllten Form wird die Temperatur der Sichtseite auf 100°C erhöht und auf diesem Niveau 30 min gehalten.

Nach dem Befüllen der Form wird deren Rückseitentemperatur für weitere 10 min auf 40°C temperiert gehalten und dann für den Rest des Zyklus (ca. 20 min) auf 100°C gehalten.

Die ausgehärteten Formteile können bei 100°C entformt werden.

Wo in den nachfolgenden (Vergleichs-)Beispielen Cristobalitmehl als Füllstoff eingesetzt wird, kann ebensogut Quarzmehl verwendet werden. Die mechanischen Eigenschaften, die für Cristobalit-gefüllte Formteile berichtet werden, werden auch für Quarzmehl gefüllte erhalten.

Die Eigenschaften der erhaltenen Formteile (in den Beispielen wurden Küchenspülen hergestellt) wurden dann an den so erhaltenen Formteilen gemessen.

Zum Vergleich mit konventionell hergestellten Küchenspülen werden die Eigenschaften Kratzfestigkeit, Abriebbeständigkeit und Schlagzähigkeit untersucht.

Die Prüfung der Kratzfestigkeit erfolgte mit einem sogenannten "hardness and adhesion tester", Modell 413 der Fa. Erichsen, Hemer, Deutschland, wobei eine Diamantnadel mit 90°-Kegel verwendet wurde, um mit aufsteigenden Belastungen von 1 bis 10 N an der Gebrauchsseite (Sichtseite) einer Probe Kratzer zu erzeugen.

Die Tiefe dieser Kratzer wurde mit einem Rauhtiefenmeßgerät, Model T 2000, mit Linearvorschubeinheit LV 50 der Fa. Hommelwerke, Villingen-Schwenningen, Deutschland als R max gemessen.

Zusammenfassend fällt bei den erfindungsgemäß hergestellt Formkörpern auf, daß sie eine wesentlich verbesserte Kratzfestigkeit aufweisen. Proben (Vergleichsbeispiele), welche eine sehr hohe Ausgangsrauhigkeit, d.h. sehr hohe Oberflächenrauhigkeit aufgewiesen haben, wurden von der Prüfung der Kratzfestigkeit ausgenommen, weil in der Regel die zu ermittelnde Kratzertiefe erheblich geringer ist, als die an der Oberfläche zu messende Rauheit. In diesen Fällen wurde lediglich die Oberflächenrauhigkeit mit dem Rauhtiefenmeßgerät geprüft und angegeben.

Die Schlagzähigkeit wurde nach dem sogenannten Charpy-Verfahren gemessen, angelehnt an die DIN 53453. Die Probendicken ergeben sich dabei in Abwandlung von der Norm aus der Dicke des Formteilausschnittes an dem die Prüfung vorgenommen wird. Alle anderen Vorgaben der Norm werden beachtet.

Die Schlagbelastung wird jeweils so aufgebracht, daß senkrecht zur Sichtseite des Formteils geschlagen wird. Für die Schlagversuche wird ein Gerät Modell 5102 der Fa. Zwick in Ulm, Deutschland verwendet.

Die Abriebbeständigkeit der Sichtseitenoberflächen der Formteile wird nach DIN 53754 geprüft, wobei als Prüfgerät das Gerät Taber Abrader, Modell 5130 der Fa. Teledyne Taber, North Tonawanda, N.Y., USA verwendet wurde.

### Vergleichsbeispiel 1:

1,8 kg PMMA einer normalen Type im Molekulargewichtsbereich M_{W} von 50000 bis 200000 wird in 8,2 kg MMA gelöst und mit Entformungshilfsmittel (27 g Stearinsäure der Fa. Merck, Deutschland) und Vernetzer (200 g Trimethylolpropantrimethacrylat der Fa. Degussa, Deutschland) versetzt. Dann wird mit 17 kg Cristobalitmehl (alle Partikel < 200 µm, silanisiert, in der Korngrößenverteilung 5% > 100µm, 42 Gew.% > 32 µm) auf einen Füllstoffgehalt der Gießmasse von 63 Gew.% eingestellt. Nach Zusatz von Peroxiden (35 g Perkadox 16 und 80 g Laurox, jeweils von der Fa. Akzo, Niederlande) wird in geeigneten Formhohlkörpern polymerisiert, so daß eine Küchenspüle entsteht. Die Befüllzeit betrug ca. 45 sec, der Befülldruck war 3,5 bar.

Von einer Probe aus dem Beckenboden des Formteils, der eine Dicke von 9 mm aufwies, wurden die Schlagzähigkeit, die Kratzfestigkeit und die Taber-Abriebbeständigkeit bestimmt. Zusätzlich wurde die Rückseite des Formteils visuell beurteilt.
Ergebnisse:
Schlagzähigkeit: 4,5 kJ/m²,
Kratzfestigkeit:

| | | | | | | | | | | |
|---|---|---|---|---|---|---|---|---|---|---|
| Belastung: (N) | 10 | 9 | 8 | 7 | 6 | 5 | 4 | 3 | 2 | 1 |
| Tiefe(µm) | 14,9 | 14,4 | 12,3 | 8,0 | 6,9 | 5,6 | 3,0 | 2,0 | | |

Abriebbeständigkeit: 43,7 mg/100 Umdrehungen

Die Rückseite ist relativ glatt, der mehlförmige Füllstoff ist nicht abgesunken.

### Vergleichsbeispiel 2:

0,9 kg PMMA einer normalen Type im Molekulargewichtsbereich M_{W} von 50000 bis 200000 wird in 9,1 kg MMA gelöst und entsprechend Vergleichsbeispiel 1 mit Entformungshilfsmittel und Vernetzer versetzt. Der so erhaltene Sirup ist dünnflüssiger als im Vergleichsbeispiel 1. Dann wird mit 17 kg Cristobalitmehl (alle Partikel < 200 µm, silanisiert, in der Korngrößenverteilung 5% > 100µm, 42 Gew.% > 32 µm) auf einen Füllstoffgehalt der Gießmasse von 63 Gew.% eingestellt. Nach Zusatz von Peroxiden (wie Vergleichsbeispiel 1) wird in geeigneten Formhohlkörpern polymerisiert, so daß eine Küchenspüle entsteht. Die Befüllzeit war 13 sec., der Befülldruck betrug 2 bar.

Von einer Probe aus dem Beckenboden des Formteils, der eine Dicke von 8,5 mm aufwies, wurden die Schlagzähigkeit, die Kratzfestigkeit und die Taber-Abriebbeständigkeit bestimmt. Zusätzlich wurde die Rückseite des Formteils visuell beurteilt:
Ergebnisse:
Schlagzähigkeit: 7,5 kJ/m²,
Kratzfestigkeit:

| | | | | | | | | | | |
|---|---|---|---|---|---|---|---|---|---|---|
| Belastung: (N) | 10 | 9 | 8 | 7 | 6 | 5 | 4 | 3 | 2 | 1 |
| Tiefe(µm) | 10,4 | 9,4 | 8,8 | 7,4 | 7,5 | | | | | |

Abriebbeständigkeit: 21,7 mg/100 Umdrehungen

Die Rückseite ist sehr rauh. Der mehlförmige Füllstoff ist abgesunken und die Werte für die Kratzfestigkeit und die Abriebbeständigkeit sind deutlich verbessert.

### Vergleichsbeispiel 3:

2,0 kg PMMA einer normalen Type im Molekulargewichtsbereich M_{W} von 50000 bis 250000 wird in 8,0 kg MMA gelöst und mit Entformungshilfsmittel (35 g Stearinsäure der Fa. Merck, Deutschland) und Vernetzer (200 g Trimethylolpropantrimethacrylat der Fa. Degussa, Deutschland) versetzt. Dann werden 27 kg eines kantengerundeten Sandes im Korngrößenbereich von 200 bis 2000 µm (eine Mischung aus den Typen 1/8 und 2/9 SIG silanisiert der Fa. Dorfner in Amberg, Deutschland) zugegeben, was einen Füllstoffanteil der Gießmasse von 73% ausmacht. Diese Gießmasse verwendet einen vergleichsweise dickflüssigen Sirup ähnlich Vergleichsbeispiel 1 und einen viel groberen Füllstoff als die Vergleichsbeispiele 1 und 2. Nach dem Zusatz von Peroxiden (40 g Perkadox 16 und 80 g Laurox, jeweils von der Fa. Akzo, Niederlande) wird die Gießmasse in geeigneten Formen so polymerisiert, so daß die Gebrauchsseite des Formteils nach unten zeigt. Die Befüllzeit war 70 sec., der Befülldruck betrug 5 bar.

Die Kornverteilung des Formteils ist sehr gleichmäßig, gleichzeitig hat ein leichtes (erwünschtes) Absinken des Füllstoffes auf die Gebrauchsseite des Formteils stattgefunden. Die Rückseite des Formteils ist teilweise sehr rauh, der Ausgußbereich der Rückseite weist nach dem Befräsen kleine Löcher auf, die die Dichtigkeit einer montierten Ablaufgarnitur beeinträchtigen. Die Dicke des Beckenbodens betrug 10 mm.

### Ergebnisse:

Schlagzähigkeit: 1,8 mJ/mm²,
Oberflächenrauhheit der Gebrauchsseite des Beckenbodens 103,5 µm. Der Kratzfestigkeitstest wurde an dieser Probe nicht durchgeführt, da dieser angesichts der extrem hohen Oberflächenrauhigkeit keine sinnvollen Daten liefern kann.

### Beispiel 1:

1,5 kg Siliconelastomer (Type VP 445006) mit einer Elastomerpartikelgröße (Agglomerate) bis ca. 1 mm der Fa. Wacker, Burghausen, Deutschland wird in 8,5 kg MMA gegeben und an einem Dissolver (Type Dispermat AE9) der Fa. VMA Getzmann, Reichshof, Deutschland, intensiv dispergiert, um die Agglomerate auf Teilchengrößen unter 100 µm zu bringen. Die so erhaltene Dispersion wird wie in Vergleichsbeispiel 1 mit Entformungshilfsmittel und Vernetzer versetzt. Dann wird mit 17 kg Cristobalitmehl (alle Partikel < 200 µm, silanisiert, in der Korngrößenverteilung 5% > 100 µm, 42 Gew.% > 32 µm) auf einen Füllstoffgehalt der Gießmasse von 63 Gew.% eingestellt. Nach Zusatz von Peroxiden (wie in Vergleichsbeispiel 1) wird in geeigneten Formenhohlkörpern polymerisiert, so daß eine Küchenspüle entsteht. Die Befüllzeit betrug ca. 30 sec., der Befülldruck konnte auf 1 bar zurückgenommen werden.

Von einer Probe aus dem Beckenboden des Formteils, der eine Dicke von 9 mm aufwies, wurden die Schlagzähigkeit, die Kratzfestigkeit und die Taber-Abriebbeständigkeit bestimmt. Zusätzlich wurde die Rückseite des Formteils visuell beurteilt:
Ergebnisse:
Es ergibt sich eine außergewöhnlich gute Schlagzähigkeit von: 12,8 kJ/m²,
Kratzfestigkeit:

| | | | | | | | | | | |
|---|---|---|---|---|---|---|---|---|---|---|
| Belastung: (N) | 10 | 9 | 8 | 7 | 6 | 5 | 4 | 3 | 2 | 1 |
| Tiefe(µm) | 11,1 | 9,9 | 7,3 | 6,0 | 4,9 | 3,7 | | | | |

Abriebbeständigkeit: 35 mg/100 Umdrehungen

Der Füllstoff ist leicht abgesunken, so daß eine verbesserte Kratzfestigkeit und Abriebbeständigkeit resultiert, trotzdem ist die Rückseite relativ glatt.

### Beispiel 2:

Es wird die gleiche Rezeptur verwendet wie in Beispiel 1, es wird jedoch ein Formteil (Küchenspüle) mit geringerer Dicke an Beckenboden von 5 mm produziert, die mechanischen Werte entsprechen denen aus Beispiel 1. Aufgrund der sehr hohen Schlagzähigkeit ist die Formteildicke völlig ausreichend, um den Belastungen im täglichen Gebrauch standzuhalten (z.B. Topffalltest).

### Beispiel 3:

Die Ergebnisse dieses Beispiels sind mit Vergleichsbeispiel 3 zu vergleichen.

1,5 kg Siliconelastomer (Type VP 445006) der Fa. Wacker, Burghausen, Deutschland wird in 8,5 kg MMA gegeben und intensiv dispergiert (s.o.). Dann wird wie in Vergleichsbeispiel 3 mit Entformungshilfsmittel und Vernetzer versetzt. Dann werden 27 kg eines runden oder kantengerundeten Sandes im Korngrößenbereich von 200 bis 2000 µm (eine Mischung aus den Typen 1/8 und 2/9 SIG silanisiert der Fa. Dorfner in Amberg, Deutschland) zugegeben, was einen Füllstoffanteil der Gießmasse von 73% ausmacht. Auf den PMMA-Anteil der Rezeptur von Vergleichsbeispiel 3 konnte hier verzichtet werden.

Nach Zusatz von Peroxiden (wie in Vergleichsbeispiel 3) wird die Gießmasse in geeigneten Formen so polymerisiert, so daß die Gebrauchsseite des Formteils nach unten zeigt. Die Befüllzeit betrug ca. 30 sec., der Befülldruck betrug 1 bar.

Die Kornverteilung des Füllstoffs im Formteil ist sehr gleichmäßig, gleichzeitig hat ein leichtes Absinken des Füllstoffes auf die Gebrauchsseite des Formteils stattgefunden. Die Rückseite des Formteils ist teilweise sehr rauh, der Ausgußbereich der Rückseite weist nach dem Befräsen aber keinerlei Löcher auf, die die Dichtigkeit einer montierten Ablaufgarnitur beeinträchtigen könnten. Die Dicke des Beckenbodens betrug 10 mm.

### Ergebnisse:

Schlagzähigkeit: 2,7 kJ/mm²,
Oberflächenrauhheit R max der Gebrauchsseite des Beckenbodens 61,6 µm

### Beispiel 4:

0,3 kg PMMA einer normalen Type im Molekulargewichtsbereich M_{W} von 50000 bis 200000 wird in 8,71 kg MMA gelöst und wie in Vergleichsbeispiel 1 mit Entformungshilfsmittel und Vernetzer versetzt. Zusätzlich wird 1,0 kg Siliconelastomer (VP 445006 der Fa. Wacker, Burghausen, Deutschland) in fein dispergierter Form zugegeben. Dann wird mit 17 kg Cristobalitmehl (alle Partikel < 200 µm, silanisiert, mit der Korngrößenverteilung 5% > 100µm, 42 Gew.% > 32 µm) auf einen Füllstoffgehalt der Gießmasse von 63 Gew.% eingestellt. Nach Zusatz von Peroxiden (wie in Vergleichsbeispiel 1) wird in geeigneten Formhohlkörpern polymerisiert, so daß eine Küchenspüle entsteht. Die Befüllzeit war 33 sec., der Behälterdruck betrug 1,5 bar.

Von einer Probe aus dem Beckenboden des Formteils, der eine Dicke von 8 mm aufwies, wurden die Schlagzähigkeit, die Kratzfestigkeit und die Taber-Abriebbeständigkeit bestimmt. Zusätzlich wurde die Rückseite des Formteils visuell beurteilt:
Ergebnisse:
Schlagzähigkeit: 10,4 kJ/m²,
Kratzfestigkeit:

| | | | | | | | | | | |
|---|---|---|---|---|---|---|---|---|---|---|
| Belastung: (N) | 10 | 9 | 8 | 7 | 6 | 5 | 4 | 3 | 2 | 1 |
| Tiefe(µm) | 13,2 | 11,5 | 9,9 | 8,8 | 6,5 | 3,7 | | | | |

Abriebbeständigkeit: 27,7 mg/100 Umdrehungen

Die Rückseite ist relativ glatt, der Füllstoff ist kaum abgesunken.

### Beispiel 5:

0,7 kg PMMA einer normalen Type im Molekulargewichtsbereich M_{W} von 50000 bis 200000 wird in 8,8 kg MMA gelöst und wie in Vergleichsbeispiel 1 mit Entformungshilfsmittel und Vernetzer versetzt. Zusätzlich wird 0,5 kg Siliconelastomer (VP 445006 der Fa. Wacker, Burghausen, Deutschland) in fein dispergierter Form (Agglomerate < 100 µm) zugegeben. Dann wird mit 17 kg Cristobalitmehl (alle Partikel < 200 µm, silanisiert, mit der Korngrößenverteilung 5% > 100µm, 42 Gew.% > 32 µm) auf einen Füllstoffgehalt der Gießmasse von 63 Gew.% eingestellt. Nach Zusatz von Peroxiden (wie in Vergleichsbeispiel 1) wird in geeigneten Formhohlkörpern polymerisiert, so daß eine Küchenspüle entsteht. Die Befüllzeit war 9 sec., der Behälterdruck betrug 3 bar.

Von einer Probe aus dem Beckenboden des Formteils, der eine Dicke von 8,5 mm aufwies, wurden die Schlagzähigkeit, die Kratzfestigkeit und die Taber-Abriebbeständigkeit bestimmt. Zusätzlich wurde die Rückseite des Formteils visuell beurteilt:
Ergebnisse:
Schlagzähigkeit: 9,5 kJ/mm²,
Kratzfestigkeit:

| | | | | | | | | | | |
|---|---|---|---|---|---|---|---|---|---|---|
| Belastung: (N) | 10 | 9 | 8 | 7 | 6 | 5 | 4 | 3 | 2 | 1 |
| Tiefe(µm) | 10,4 | 10,4 | 9,9 | 7,2 | 5,7 | 3,7 | 2,6 | | | |

Abriebbeständigkeit: 29,6 mg/100 Umdrehungen

Die Rückseite ist relativ glatt, der Füllstoff ist kaum abgesunken.

### Vergleichsbeispiel 4:

2,0 kg Siliconelastomer (Type VP 445006) der Fa. Wacker, Burghausen, Deutschland wird in 8,0 kg MMA gegeben und an einem Dissolver (Type Dispermat AE9) der Fa. VMA Getzmann, Reichshof, Deutschland, intensiv dispergiert (Agglomerate < 100 µm). Die Dispersion wird wie in Vergleichsbeispiel 1 mit Entformungshilfsmittel und Vernetzer versetzt. Dann wird mit 17 kg Cristobalitmehl (alle Partikel < 200 µm, silanisiert, mit der Korngrößenverteilung 5% > 100 µm, 42 Gew.% > 32 µm) auf einen Füllstoffgehalt der Gießmasse von 63 Gew.% eingestellt. Nach Zusatz von Peroxiden wird (wie in Vergleichsbeispiel 1) in geeigneten Formenhohlkörpern polymerisiert, so daß eine Küchenspüle entsteht. Die Befüllzeit betrug ca. 30 sec., der Befülldruck konnte auf 1 bar zurückgenommen werden.

Von einer Probe aus dem Beckenboden des Formteils, der eine Dicke von 8 mm aufwies, wurden die Schlagzähigkeit, die Kratzfestigkeit und die Taber-Abriebbeständigkeit bestimmt. Zusätzlich wurde die Rückseite des Formteils visuell beurteilt:
Ergebnisse:
Es ergibt sich eine Schlagzähigkeit von: 6,6 kJ/m²,
Kratzfestigkeit:

| | | | | | | | | | | |
|---|---|---|---|---|---|---|---|---|---|---|
| Belastung: (N) | 10 | 9 | 8 | 7 | 6 | 5 | 4 | 3 | 2 | 1 |
| Tiefe(µm) | 23,4 | 18,8 | 15,0 | 13,3 | 9,0 | 5,7 | 3,7 | 2,9 | | |

Abriebbeständigkeit: 49,4 mg/100 Umdrehungen

Der Füllstoff ist nicht abgesunken, so daß keine verbesserte Kratzfestigkeit und Abriebbeständigkeit resultiert, die Rückseite relativ glatt.

## Patentansprüche

1. Gießmasse für die Herstellung von Sanitärformteilen, umfassend einen auf Methylmethacrylat basierenden Sirup sowie 50 bis 85 Gew.% eines anorganischen Füllstoffes, bezogen auf die Gießmasse, **dadurch gekennzeichnet, daß** die Gießmasse ferner Elastomerpartikel oder -partikelagglomerate mit einer Teilchengröße kleiner 100 µm in einer Menge im Bereich von 5 Gew.% bis < 20 Gew.% umfaßt, bezogen auf die Masse des Sirups.

2. Gießmasse nach Anspruch 1, **dadurch gekennzeichnet, daß** der Sirup PMMA mit einem Molekulargewicht von 50.000 bis 250.000 (M_{w}) in einer Menge bis zu 20 Gew.%, bezogen auf die Masse des Sirups, umfaßt.

3. Gießmasse nach Anspruch 1 oder 2, **dadurch gekennzeichnet, daß** die Elastomerpartikel oder -partikelagglomerate mit einem Anteil von 10 bis 18 Gew.%, bezogen auf die Masse des Sirups, enthalten sind.

4. Gießmasse nach einem der Ansprüche 1 bis 3, **dadurch gekennzeichnet, daß** das Elastomer der Partikel bzw. Agglomerate aus teilvernetztem Polymer besteht.

5. Gießmasse nach einem der voranstehenden Ansprüche, **dadurch gekennzeichnet, daß** die Elastomerpartikel eine Kern-Hülle-Struktur aufweisen, wobei der Kern von einem Elastomer gebildet wird und die Hülle aus einem matrixverträglichen, im Sirup im wesentlichen unlöslichen Polymer.

6. Gießmasse nach Anspruch 5, **dadurch gekennzeichnet, daß** die Hülle chemisch an das Kernelastomer gebunden ist.

7. Gießmasse nach Anspruch 5 oder 6, **dadurch gekennzeichnet, daß** die Hülle ein thermoplastisches Polymer umfaßt.

8. Gießmasse nach Anspruch 5 oder 6, **dadurch gekennzeichnet, daß** die Hülle ein teilvernetztes Polymer umfaßt.

9. Gießmasse nach einem der Ansprüche 5 bis 8, **dadurch gekennzeichnet, daß** die Hülle im Sirup der Gießmasse quellbar ist.

10. Gießmasse nach einem der Ansprüche 5 bis 9, **dadurch gekennzeichnet, daß** die Hülle ein Acrylatpolymer umfaßt.

11. Gießmasse nach einem der voranstehenden Ansprüche, **dadurch gekennzeichnet, daß** der Kern aus einem teilvernetzten Polysiloxan besteht, welches zur Bildung der Hülle mit einem Acrylatmonomer gepfropft ist.

12. Gießmasse nach einem der Ansprüche 5 bis 11, **dadurch gekennzeichnet, daß** der Gewichtsanteil des Kerns in den Kern-Hülle-Elastomerpartikeln einen Anteil von 40 bis 60 Gew.% aufweist.

13. Gießmasse nach einem der voranstehenden Ansprüche, **dadurch gekennzeichnet, daß** der Füllstoffgehalt 60 bis 80 Gew.%, bezogen auf die Gießmasse, beträgt.

14. Sanitärformteil, hergestellt unter Verwendung einer Gießmasse gemäß einem der Ansprüche 1 bis 13.

15. Sanitärformteil in Form einer Küchenspüle gemäß Anspruch 14, wobei die Bodenstärke der Küchenspüle geringer ist als 7 mm.

16. Küchenspüle nach Anspruch 15, **dadurch gekennzeichnet, daß** die Bodenstärke ≤ 5 mm beträgt.

## Claims

1. Moulding composition for the production of sanitary-ware components, comprising a methyl-methacrylate-based syrup and from 50 to 85% by weight, expressed in terms of the moulding composition, of an inorganic filler, **characterised in that** the moulding composition furthermore comprises elastomer particles or elastomer particle aggregates having a particle size smaller than 100 µm in an amount in the range of 5% by weight to < 20% by weight, expressed in terms of the mass of the syrup.

2. Moulding composition according to Claim 1, **characterised in that** the syrup comprises PMMA with a molecular weight (M_{W}) of from 50,000 to 250,000 in an amount of up to 20% by weight, expressed in terms of the mass of the syrup.

3. Moulding composition according to Claim 1 or 2, **characterised in that** it contains a proportion of from 10 to 18% by weight of the elastomer particles or elastomer particle aggregates, expressed in terms of the mass of the syrup.

4. Moulding composition according to one of Claims 1 to 3, **characterised in that** the elastomer of the particles or aggregates consists of partially crosslinked polymer.

5. Moulding composition according to one of the preceding claims, **characterised in that** the elastomer particles have a core/shell structure, the core being formed by an elastomer and the shell from a matrix-compatible polymer which is essentially insoluble in the syrup.

6. Moulding composition according to Claim 5, **characterised in that** the shell is chemically bonded to the core elastomer.

7. Moulding composition according to Claim 5 or 6, **characterised in that** the shell comprises a thermoplastic polymer.

8. Moulding composition according to Claim 5 or 6, **characterised in that** the shell comprises a partially crosslinked polymer.

9. Moulding composition according to one of Claims 5 to 8, **characterised in that** the shell is swellable in the syrup of the moulding composition.

10. Moulding composition according to one of Claims 5 to 9, **characterised in that** the shell comprises an acrylate polymer.

11. Moulding composition according to one of the preceding claims, **characterised in that** the core consists of a partially crosslinked polysiloxane, which is grafted with an acrylate monomer to form the shell.

12. Moulding composition according to one of Claims 5 to 11, **characterised in that** the proportion by weight of the core in the core/shell elastomer particles amounts to a proportion of from 40 to 60% by weight.

13. Moulding composition according to one of the preceding claims, **characterised in that** the filler content is from 60 to 80% by weight, expressed in terms of the moulding composition.

14. Sanitary-ware component, produced using a moulding composition according to one of Claims 1 to 13.

15. Sanitary-ware component in the form of a kitchen sink according to Claim 14, the bottom thickness of the kitchen sink being less than 7 mm.

16. Kitchen sink according to Claim 15, **characterised in that** the bottom thickness is ≤ 5 mm.

## Revendications

1. Matière à couler pour la production de pièces moulées sanitaires comprenant un sirop à base de méthacrylate de méthyle ainsi que 50 à 80 % en poids par rapport à la matière à couler d'une matière de charge inorganique, **caractérisée en ce que** la matière à couler comprend de plus des particules ou des agglomérats de particules d'élastomère d'une taille de particules inférieure à 100 µm dans une quantité de 5 % en poids à moins de 20 % en poids par rapport à la masse du sirop.

2. Matière à couler selon la revendication 1, **caractérisée en ce que** le sirop comprend du PMMA de poids moléculaire de 50 000 à 250 000 (M_{w}) dans une quantité pouvant atteindre 20 % en poids par rapport à la masse du sirop.

3. Matière à couler selon la revendication 1 ou 2, **caractérisée en ce que** les particules ou les agglomérats de particules d'élastomère sont contenues dans une proportion de 10 à 18 % en poids par rapport à la masse du sirop.

4. Matière à couler selon l'une quelconque des revendications 1 à 3, **caractérisée en ce que** l'élastomère des particules et/ou des agglomérats de particules se compose de polymère partiellement réticulé.

5. Matière à couler selon l'une quelconque des revendications précédentes, **caractérisée en ce que** les particules d'élastomère comportent une structure noyau-enveloppe, le noyau étant formé d'un élastomère et l'enveloppe d'un polymère matriciel sensiblement insoluble dans le sirop.

6. Matière à couler selon la revendication 5, **caractérisée en ce que** l'enveloppe est chimiquement reliée à l'élastomère à noyau.

7. Matière à couler selon la revendication 5 ou 6, **caractérisée en ce que** l'enveloppe comprend un polymère thermoplastique.

8. Matière à couler selon la revendication 5 ou 6, **caractérisée en ce que** l'enveloppe comprend un polymère partiellement réticulé.

9. Matière à couler selon l'une quelconque des revendications 5 à 8, **caractérisée en ce que** l'enveloppe peut être trempée dans le sirop de la matière à couler.

10. Matière à couler selon l'une quelconque des revendications 5 à 9, **caractérisée en ce que** l'enveloppe comprend un polymère d'acrylate.

11. Matière à couler selon l'une quelconque des revendications précédentes, **caractérisée en ce que** le noyau se compose d'un polysiloxane partiellement réticulé, lequel polysiloxane est greffé avec un monomère d'acrylate pour former l'enveloppe.

12. Matière à couler selon l'une quelconque des revendications 5 à 11, **caractérisée en ce que** la proportion en poids du noyau dans les particules noyau-enveloppe d'élastomère est de 40 à 60 % en poids.

13. Matière à couler selon l'une quelconque des revendications précédentes, **caractérisée en ce que** la teneur en matière de charge est de 60 à 80 % en poids par rapport à la matière à couler.

14. Pièce moulée sanitaire produite en utilisant une matière à couler selon l'une quelconque des revendications 1 à 13.

15. Pièce moulée sanitaire en forme d'évier de cuisine selon la revendication 14, l'épaisseur du fond de l'évier étant inférieure à 7 mm.

16. Evier de cuisine selon la revendication 15, **caractérisée en ce que** l'épaisseur du fond est inférieure ou égale à 5 mm.
